# EUROPEAN PATENT APPLICATION

(11) **EP 3 435 620 A1**
(43) Date of publication of application: **30.01.2019**
(21) Application number: 17183099.5
(22) Date of filing: 25.07.2017
(51) Int. Cl.: H04L 29/06, H04L 9/32, H04L 9/08

(54) **IDENTITY VALIDATION IN A DUPLEX COMMUNICATION**

(71) Applicant: Content Capital Ltd., Chalfont St Giles Buckinghamshire HP8 4EY (GB)
(72) Inventor: GILL, Robert William, Buckinghamshire, HP8 4EY (GB)
(74) Representative: Brantsandpatents bvba

(57) **Abstract**

The current invention relates to a method for validating the identity of a first party with respect to a conversational communication over a duplex channel between said first party and a second party; said method comprising the steps of (a) connecting said first party and said second party via a first data connection, said first data connection comprising a duplex channel between said first party and said second party, said duplex channel suitable for said conversational communication between said first party and said second party; (b) sending a request for a token to an ID server via a second data connection by said first party, said second data connection different from said first data connection; (c) receiving said token from said ID server via said second data connection by said first party; (d) in response to receiving said token, transmitting said token to said second party via a token channel by said first party, for allowing said second party to validate the identity of said first party with respect to said conversational communication over said duplex channel; wherein said token comprises at least an identification of said first party, and wherein said token channel is comprised in said first data connection.

## Description

### Technical field

The invention pertains to the technical field of identity validation with respect to a conversational communication such as a telephone conversation, video conversation, chat conversation, telephone conference, video conference or chat conference.

### Background

There remains a need in the art for improved methods, systems and devices for identity validation with respect to conversational communication. One of the big issues with for instance online client management is the initial connection with the client, whereby the identity is to be validated to ensure that both ends of the conversation are who they say they are. For example, often passwords, part of passwords or personal information must be shared across an open voice network to allow both parties to be comfortable that the other party is who they say they are. This process is intrinsically insecure, and open to abuse by hackers, spoof calls and general criminals. Another problem with identity validation is that existing systems are complex and/or time-consuming for the parties involved in the communication.

Related methods and systems are disclosed in in EP 2,334,111, GB 2 524 812, US 2007/0190975 and US 7,986,716.

The present invention aims to resolve at least some of the problems mentioned above.

### Summary of the invention

The present invention aims to provide methods, systems and devices for allowing identity validation without requiring the sharing of private information over the data connection used for the communication.

Thereto, the invention provides a method for validating the identity of a first party with respect to a conversational communication over a duplex channel between said first party and a second party; said method comprising the steps of
(a) connecting said first party and said second party via a first data connection, said first data connection comprising a duplex channel between said first party and said second party, said duplex channel suitable for said conversational communication between said first party and said second party;
(b) sending a request for a token to an ID server via a second data connection by said first party, said second data connection different from said first data connection;
(c) receiving said token from said ID server via said second data connection by said first party;
(d) in response to receiving said token, transmitting said token to said second party via a token channel by said first party, for allowing said second party to validate the identity of said first party with respect to said conversational communication over said duplex channel;
wherein said token comprises at least an identification of said first party, and wherein said token channel is comprised in said first data connection.

Hereby, the term "conversational communication" may concern any exchange of data between parties that involves some kind of real-time or near-real-time interaction, whereby an action of one party preferably assumes a reaction of the other party within a short time, e.g., less than one minute or less than ten seconds. Preferred embodiments provide conversational communication belonging to the following categories: telephone conversation, video conversation, chat conversation, telephone conference, video conference, chat conference.

Furthermore, the term "data connection" refers to a connection over a network allowing the exchange of information, such as a telephone connection allowing the exchange of voice information, or an IP-switched data connection, allowing the exchange of IP packets over the data connection.

The term "duplex channel" refers to a point-to-point channel, preferably full-duplex, connecting the two parties, which is set up at the initiative of one of the parties and provides support for an intended type of conversational communication. For instance, in case the conversational communication concerns a telephone conversation, the duplex channel may e.g. be a classic landline connection, a two-way VoIP channel according to an open protocol such as the SIP protocol or a Skype™ voice conversation.

The term "token channel" refers to a point-to-point channel connecting the two parties, which allows sending the token from the first party to the second party. In a preferred embodiment, the token channel is equal to the duplex channel. In an alternative embodiment, the token channel concerns another channel comprised in the first data connection but not belonging to the duplex channel with which the conversational communication is held. In case of a voice conversation, this may e.g. be a (chat) message that is sent by the first party to the second party via the same first data connection over which the voice conversation is held.

The advantage of a method according to the present invention is five-fold, with identity validation that is more integrated, more flexible, more secure, less intrusive in the communication, and more accurate when compared to prior art methods.

Firstly, the method provides better integration. By sending the token over the same data connection as the conversational communication, the communication and the validation are integrated in a single connection, reducing complexity while enhancing reliability. Indeed, since the conversational communication already necessitates the presence of said first data connection, the inclusion of a means of identity validation does not result in additional requirements in linking both parties. Particularly, validation can only takes place after the conversational communication has initiated. This is advantageous particularly when compared to prior art methods as disclosed in EP 2,334,111 and GB 2 524 812, which do not allow to delay identity validation until the intended conversational communication is set up. Concretely, the methods according to EP 2,334,111 and GB 2 524 812 force a first user to validate its identity first, even if he/she finds out later that the party he/she intended to call is not available. The process of validation taking up some finite time, this is a mere loss of time for the person performing the identity validation. The present invention solves this problem by requiring that the other party is reached first before considering identity validation.

Related, the present invention provides more flexibility. By allowing the first and second party to initiate the conversational communication before identity validation takes place, the identity validation is rendered optional. Particularly, the first and the second party are allowed to interact first before deciding on whether identity validation is required. This leads to more selective and therefore more efficient identity validation. Indeed, identity validation takes up a small but non-negligible time period amounting to a few seconds, which leads to time waste, particularly in cases where the second party is already convinced of the identity of the first party, e.g., in cases where the conversational communication is a voice call and the second party is familiar with the voice of the first party. If identity validation were mandatory, as in EP 2 334 111 and GB 2 524 812, several seconds would be wasted, which may amount to several wasted minutes per day in cases where the calls are initiated from, e.g., a call center as first party. Related, the present invention does not impose a certain role on the first or second party, i.e. the first party may be the initiator of the communication but may also be the recipient of the communication. This is important because this allows, in some embodiments, to let all parties to the communication have their identity validated. Opposed to this, EP 2 334 111 lacks means to perform identity validation of the call recipient, and, a fortiori, of the combination of both the call initiator and the call recipient, despite the obvious usefulness of such identity validation. This relates to EP 2 334 111 being concerned solely with identity validation between a human call initiator and a computer-implemented call recipient, lacking means for performing identity validation of a human call initiator by a human call recipient.

A third advantage of the present invention is its improved security over the prior art. By involving an ID server separate from the first party or the third party, the identity validation is not compromised even if the duplex channel or even the entire first data connection is compromised. In this regard, the invention allows secure identity validation even if the duplex channel is not secure. This allows the ID server to act as a certificate authority, following a generic and secure approach in the generating of tokens. Opposed to this, both US 2007/0190975 and US 7,986,716 lack an ID server, letting the identity validation instead take place directly between the two callers, which is insecure particularly in cases where one of the parties operates under a false identity.

A fourth advantage of the present invention is that it is less intrusive. Particularly, across all embodiments, the duplex channel need never be completely be reserved for the sole purpose of identity validation at any time. In view of the duplex channel allowing two directions, the present intervention requires the use of the first data connection only for the duration of the transmission of the token, and this only in a single direction, leaving the other direction untouched. In some embodiments, intervention in the communication may even altogether be avoided. This is the case for instance where the token channel does not overlap with the duplex channel, as, e.g., when the duplex channel carries voice communication and the token channel carries text messages. Another such embodiment is where the duplex channel is also the token channel and carries voice communication, whereby the token is transmitted in the form of an audio sequence that is inaudible. This is opposed to the case of EP 2 334 111, where identity validation blocks both directions for the entire duration of the identity validation, taking up more extra time preceding and following the actual transmission of the token. Furthermore, even in an embodiment where the duplex channel is also the token channel carrying voice communication and the token is an audio sequence audible to human listeners, the present invention has the advantage that the second party may be automatically informed that the identity validation is taking place, and may moreover be able to intuitively estimate the remaining time needed for the identity validation.

Finally, the present invention has the advantage of capturing more accurate information regarding communications. With identity validation taking place only when the conversational conversation has started, the present invention allows associating tokens not only to the first party but also to the information relating to the second party and/or conversation information. This is opposed to EP 2 334 111, where identity validation take place before the actual call takes place. Hence, EP 2 334 111 lacks means to associate information regarding the second party with the given token at the time of handing out the token.

In a second aspect, the present invention provides a system for validating the identity of a first party with respect to a conversational communication over a duplex channel between said first party and a second party, said system comprising an ID server, a first party device and a second party device;
- wherein each of said first party device and said second party device is configured for establishing a connection to the other device via a first data connection; wherein said first data connection comprises a duplex channel to the other device, said duplex channel suitable for said conversational communication between said first party and said second party;
- wherein said first party device is configured for establishing a connection to said ID server via a second data connection different from said first data connection;
- wherein each of said first party device and said second device is configured for establishing a token channel comprised in said first data connection, said token channel connecting the first party device and the second party device, wherein optionally said token channel is equal to said duplex channel;
- wherein said ID server is configured for establishing a connection to said first party device via said second data connection;
- wherein said system is configured for executing a method according to claims 1-8 involving a token;
- and wherein optionally said device associated with said first party is configured for generating an audio sequence representing said token.

In a third aspect, the present invention provides a first party device for use in a system for validating the identity of said first party with respect to a conversational communication over a duplex channel between said first party and a second party according to the present invention;
- wherein said first party device is configured for establishing a connection to the second party device via a first data connection; wherein said first data connection comprises a duplex channel to the second device, said duplex channel suitable for said conversational communication between said first party and said second party;
- wherein said first party device is configured for establishing a connection to an ID server via a second data connection different from said first data connection;
- wherein the first party device is configured for establishing a token channel comprised in said first data connection, said token channel connecting the first party device and the second party device, wherein optionally said token channel is equal to said duplex channel;
- wherein optionally said first party device is configured for generating an audio sequence representing a token;
- wherein said first party device is configured for executing a method comprising the steps of:
   (i) connecting to said second party device via said first data connection;
   (ii) sending a request for a token to said ID server via said second data connection;
   (iii) receiving said token from said ID server via said second data connection;
   (iv) in response to receiving said token, transmitting said token to said second party device over said token channel;
   wherein said token comprises at least an identification of said first party.

In a fourth aspect, the invention offers a second party device for use in a system for validating the identity of said first party with respect to a conversational communication over a duplex channel between said first party and said second party according to the present invention;
- wherein said second party device is configured for establishing a connection to said first party device via a first data connection; wherein said first data connection comprises a duplex channel to said first party device, said duplex channel suitable for said conversational communication between said first party and said second party;
- wherein said second party device is configured for establishing a connection to an ID server with a third data connection different from said first data connection;
- wherein said second party device is configured for establishing a token channel comprised in said first connection, said token channel connecting the first party device and the second party device, wherein optionally said token channel is equal to said duplex channel;
- wherein optionally said second party device is configured for determining a token from an audio sequence representing said token;
- wherein said device associated with said first party is configured for executing a method comprising the steps of:
   (I) connecting to said first party device via said first data connection;
   (II) receiving a token from the first party device via said token channel;
   (III) transmitting said token received in step (II) to said ID server via said third data connection, whereby optionally prior to transmitting said token, the token is determined from the audio sequence representing said token;
   (IV) receiving an indication from said ID server, said indication indicating whether said received token received in step (II) validly identifies said first party;
   wherein said token comprises at least an identification of said first party.

In a fifth aspect, said ID server for use in a system for validating the identity of a first party with respect to a conversational communication over a duplex channel between said first party and a second party according to the present invention;
- wherein said ID server is configured for establishing a connection to a first party device via a second data connection;
- wherein said ID server is configured for establishing a connection to a second party device via a third data connection different from said second data connection;
- wherein said ID server is configured for executing a method comprising the steps of:
   (01) receiving a request for a token via said second data connection from said first party device;
   (02) sending said token via said second data connection to said first party device;
   (03) receiving a to-be-tested token via said third data connection from said second party device;
   (04) comparing said to-be-tested token to said token;
   (05) sending an indication via said third data connection to said second party device; said indication indicating whether said to-be-tested token validly identifies said first party;
   wherein said token comprises at least an identification of said first party.

The advantages of said system, said first party device, said second party device and said ID server are similar to those of the method according to the present invention.

In a sixth aspect, the invention provides a use of a method for validating the identity with respect to a conversational communication over a duplex channel with a plurality of parties according to the present invention, whereby the identity of each of said plurality of parties is validated.

The advantage of such a use lies in the security brought about by identity validation of all parties involved in the communication. Hereby, it is to be noted that the method according to the present invention is fully suitable to be applied not only by the first party but by any party in the communication.

Further embodiments and their respective advantages are discussed in the dependent claims.

### Description of figures

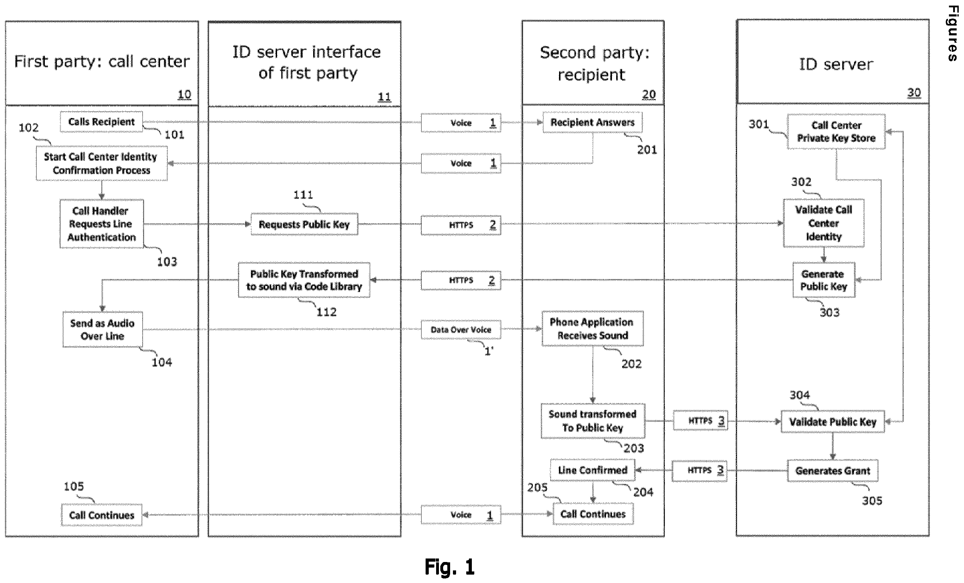

**Figure 1** shows a process flow illustrating an example embodiment of the present invention.

### Detailed description of the invention

In this document, the term "data connection" refers to a connection over a network allowing the exchange of information, such as a telephone connection allowing the exchange of voice information, or an IP-switched data connection, allowing the exchange of IP packets over the data connection. The data connection may relate to a point-to-point data exchange over a circuit-switched network, whereby the physical lines involved may be to some extent identifiable or even individually identifiable. Such a circuit-switched network setup is found for traditional "POTS" (plain old telephone system) telephony, but is also encountered where data connections are required to meet certain external requirements such as high resilience and/or high security. However, the data connection may also be realized over a packet-switched network wherein individual packets belonging to the data exchange are switched on a per-destination basis or even a per-packet basis in their journey from source to destination. In the latter case, individual packets belonging to the same data connection may follow alternative routes to their destination, e.g. because of load balancing mechanism within the network extending between the source and the destination. Nevertheless, even in those cases, all packets traveling from the same source to the same destination are said to belong to the same data connection, as is silently assumed in mostly all Internet applications. Overall, all data packets travelling between two parties over the same packet-switched network are equivalent at IP packet level, and are considered as belonging to the same data connection in this document, regardless of whether they are equivalent "higher up in the protocol stack", as e.g. in the case of packets belonging to different TCP streams and/or different applications.

Furthermore, in this document, the term "duplex channel" refers to a point-to-point channel, preferably full-duplex, extending between two connected parties, which is set up at the initiative of one of the parties and provides support for an intended type of conversational communication. For instance, in case the conversational communication concerns a telephone conversation, the duplex channel may e.g. be a classic landline connection, a two-way VoIP channel according to an open protocol such as the SIP protocol or a Skype™ voice conversation. Hereby, it is the first data connection between the two parties that carries the duplex channel with the actual content of the conversational communication, such as a voice channel. However, the first data connection may also carry data not belonging to the duplex communication, such as profile/account status information of the parties. Another example where the first data connection carries data not belonging to the duplex communication is where information is sent in a format different from that of the intended conversational communication. For instance, in cases where the conversational communication concerns a voice call, chat messages sent between parties over the data connection do not belong to the data exchange of the duplex channel. This difference is elucidated further by the examples. A third example is the data of the token channel, which in some embodiments may be transmitted through the first data connection but not through the duplex channel.

In this document, the terms "chat conversation" and "chat conference" may refer to the exchange of chat data in a conversational communication between two or more parties. Hereby, the nature of chat data may be any type of text, audio recording, video recording, picture or other portion of data that may be exchanged in the context of a chat session. This may relate to the use of Snapchat™, WhatsApp™, Facebook Messenger™, Apple FaceTime™ and similar applications.

While both EP 2 334 111 and GB 2 524 812 assume that one of both parties is a machine, the present invention is advantageous in that it allows identity validation between humans. Identity validation between humans may be more reliable because, apart from the identity validation disclosed in this document, a human party may be harder to deceive by a potential attacker, because a human caller may notice other indications of potential fraud relating to the content of the communication or, in case the communications comprises voice and/or images and/or video, the overall tone and/or body language.

In a preferred embodiment of the present invention, said token channel is equal to said duplex channel. This is advantageous since it allows for identity validation that is both simple and robust. Indeed, the duplex channel is already set up when identity validation starts. So relying entirely on the duplex channel for transmission of the token is a safe option in this case. Particularly in cases where the communication concerns a telephone conversation, no other means to send the token other than the duplex channel may be available. In such cases, the present invention provides a convenient way of performing identity validation over a simple duplex voice channel.

According to another embodiment of the present invention, said conversational communication comprises voice communication; wherein said token is transmitted in step (d) as an audio sequence representing said token, optionally said audio sequence being inaudible to a human ear. Preferably, the audio sequence concerns a representation conforming to a known standard to send data over a voice channel. One example of such a standard is Data Over Voice (DOV), preferably complying with CEPT recommendation T/CD 01-13 (Odense 1986) and related variants. Another example is Dual-Tone Multi-Frequency signaling (DTMF) and related touch-tone / MF4 standards, preferably complying with ITU-T recommendation 0.23. Alternatively, another mode of converting the token into an audio sequence may be employed. Hereby, a mode of converting resulting in an inaudible audio sequence may be advantageous because it further enhances the convenience for the parties involved in the communication, with minimal interruption due to identity validation. Particularly, the audio sequence may be hidden by audio steganography, e.g. spread spectrum encoding. In a preferred embodiment, the audio sequence may be embedded in a pre-recorded audio fragment, such as a piece of music or a pre-recorded waiting message. Such embedding can be performed by overlaying the audio sequence and the audio fragment. In a setting with voice communication, such as a plain phone call, sending the token as an audio sequence may be advantageous because it may audio may be the only convenient format, particularly where the token channel is also the duplex channel. In this regard, the present invention advantageously combines the concept behind standards like DOV and DTMF with the use of a separate I D server, in order to obtain a fully secured mode of identity validation.

In another preferred embodiment, said conversational communication comprises a telephone conversation and/or a video conversation and/or a chat conversation between said first party and said second party.

In yet another embodiment, the first data connection connecting said first party and said second party in step (a) comprises a communication server different from said ID server; preferably wherein said first data connection comprises a first connection segment connecting said first party and said communication server and a second connection segment connecting said second party to said communication server. Such an embodiment reflects a typical set-up in practical systems for chat conferences, voice conferences and video conferences, whereby a central communication server is the intermediary between the two or more parties participating in the communication.

In another embodiment, said conversational communication comprises a telephone conference and/or a video conference and/or a chat meeting between said first party, said second party and at least one further party.

According to another embodiment, said token is uniquely associated with a single instance of said conversational communication between said first party and said second party; said token comprising at least a communication date associated with said single instance and preferably an identification of each of the parties associated with said single instance. This is advantageous because it may further enhance the accuracy of the identity validation. Hereby, each token may be indicative of not only the first party but may further comprise summarizing information about the communication as a whole. This allows to use the identity validation as a means of keeping track of communications also for purposes other than identity validation, such as the date of the communication. In some embodiments, the ID server may act as a trusted authority for timing and/or a time stamping authority.

In another preferred embodiment, said token relates to a secret stored at the ID server; wherein said secret is unknown to any party of the conversational communication; wherein said relating between said secret and said token is such that said secret cannot be obtained from said token and that said token cannot have originated from any other source than said secret; preferably wherein said token concerns a public key belonging to a key pair; wherein said key pair consists of said public key and its associated private key, said secret concerning said private key. This is advantageous since it allows to keep a detailed track of the communications for which identity validation has taken place. This enhances security and, in some embodiments, allows the ID server to act as certificate authority. In one embodiment, the relation between said secret and said token may involve a one-way-function applied to the secret to obtain the token, for instance a cryptographic hash function. Examples of cryptographic hash functions include the SHA-2 (Secure Hash Algorithm 2) family with e.g. SHA-256 and SHA-512, SHA-1, CRC-32 or CRC-64. In another embodiment, the relation between said secret and said token may involve a cryptographic key pair comprising a public key and a private key, according to e.g. the well-known RSA public-key cryptosystem, wherein the token is based on or comprises the public key, while the secret relates to or comprises the private key. In yet another embodiment, the secret may comprise a combination of a private key and a data string of details relating to the communication date and/or the first party and/or the further parties, whereby a token portion is obtained by signing said data string of details with said private key. In the latter case, the public key can be made publicly available and/or can be appended to said token portion to obtain the final token that is distributed. By operating in this manner, anyone can decipher the token to obtain said details, while only the ID server is able to generate said token, since only the ID server has access to the private key. In this regard, the ID server acts as a certificate authority, whereby each of the tokens is "signed" by the certificate authority.

In another embodiment, said method comprises the additional step (e) and (f) following step (d):
(e) upon receipt by said second party of said token transmitted by said first party in step (d), transmitting said token to said ID server over a third data connection by said second party, said third data connection different from both said first data connection and said second data connection, whereby optionally prior to transmitting said token, the token is determined from an audio sequence representing said token;
(f) receiving an indication from said ID server by said second party, said indication indicating whether said received token received in step (d) validly identifies said first party.

This is advantageous because it provides verification of the validity of the token transmitted by the first party. Rather than merely letting the first party identify itself, the second party explicitly verifies the validity of the identification provided by the token. In a preferred embodiment, this is performed automatically or semiautomatically by a software or hardware module present in the second party device, preferably automatically determining the token from the signal received over the token channel, sending it to the ID server for verification and processing the response received from the ID server. In an alternative embodiment, said token received at the second party device is processed at least partially manually by the second party, e.g. by an action of the second party performed with the token. Such an action may for instance be the sending of the token to the ID server via a human-friendly interface such as e-mail, a text message or a web page that allows inserting the token in a text field. Related, in a preferred embodiment of the system according to the present invention, the second party device is configured for establishing a connection to said ID server via a third connection different from both said first data connection and said second data connection; wherein said ID server is configured for establishing a connection to said second device via said third data connection; wherein said system is configured for executing a method according to steps (a) to (f) involving a token; and wherein optionally said second party device is configured for determining the token from the audio sequence representing said token.

In a preferred embodiment, each of said first and said second party device are equipped with means to automatically convert the token to an audio sequence and vice versa. These means may concern dedicated hardware present in the device, but may as well be completely implemented in software. This may relate to a first party identity validation module that is able to receive the token in text form (e.g., "ASCII form") from the ID server, convert it to an audio segment, either audible or inaudible, and send it at the start of the communication or insert it during the communication. This may also relate to a second party identity validation module connected to the second party device that is able to listen to the audio sequence, extract the token from there and validate the token with the ID server. Preferably, an identity validation module houses the functionality of both a first and a second party identity validation module. In an alternative embodiment, it is the ID server and not the first and/or second party identity validation module that performs the conversion from token in text form to audio sequence or vice versa. In such a scenario, the data exchanged over the second or third data connection concerns the audio sequence instead of the text version of the token.

In another preferred embodiment, the identity validation starts shortly after the duplex channel turns is set up for the conversational communication. In a particularly preferred embodiment, some data is exchanged between both parties before the identity validation takes place, which allows for instance to determine whether an identity validation is desirable. In an alternative embodiment, the identity validation commences immediately after the duplex channel is set up, preferably less than a second after the duplex channel is set up, more preferably less than 0.5 seconds.

In a preferred embodiment, said second data connection is a secure connection, preferably secured by data encryption, such as a connection over HTTPS (HyperText Transport Protocol Secure). This is advantageous since it further enhances security. Particularly, this prevents packet sniffing and/or eavesdropping with respect to the second data connection. This allows that a potential attacker can only retrieve the token through packet sniffing and/or eavesdropping at the point where the token is sent over the token channel, if the token channel is insecure. Related, said third data connection preferably is a secure connection, preferably secured by data encryption, such as a connection over HTTPS. Furthermore, preferably, both said second and said third connection are secure connections, preferably secured by data encryption, such as a connection over HTTPS. In yet another embodiment, said token channel is a secure connection, preferably secured by data encryption, such as a connection over HTTPS. The combination of secure connections for the second and third data connection and the token channel may prevent the possibility of token theft altogether, even if the token channel is not secure.

The invention is further described by the following non-limiting examples which further illustrate the invention, and are not intended to, nor should they be interpreted to, limit the scope of the invention.

### Examples

### Example 1: Example architecture for audio-sequence based validation of first party in a telephone conversation

This example assumes that a first party and a second party hold a telephone conversation over a duplex channel by means of their respective first and second party device. Each of these devices may concern a landline phone, a mobile phone or a VoIP client. According to the example architecture, the first and second party device comprise a first and second ID validation module implemented in software, respectively. The first party concerns a call center. The first and second party device are mutually connected via a first data connection comprising the voice call. The first party device is further configured to establish a connection with an ID server via a second data connection, which is completely set up and maintained by the first ID validation module. Likewise, the second party device is configured to establish a connection with the ID server via a third data connection completely set up and maintained by the second ID validation module.

When the first and second party have initiated a call and desire to perform an identity validation, the first party may initiate the voice validation via a user input on the first party device. This trigger the first ID validation module to request the ID server to generate a token, which is subsequently converted to a DOV audio sequence and inserted into the communication with the second party over the duplex channel. At the second party's side, the second ID validation module automatically detects the presence of the DOV audio sequence on the duplex channel, retrieves the token from the audio sequence and sends it to the ID server. Upon confirmation of the ID server, the second ID validation module triggers the second party device to provide a visual or auditory confirmation to the second party that the identity validation has succeeded.

### Example 2: Audio-sequence-based validation of first party in a telephone conversation

Figure 1 shows a process flow illustrating an example embodiment of the present invention, wherein the communication concerns a telephone conversation, and the identity validation is based on the playback of an audio sequence. The assumed architecture and setting is similar to that of Example 1.

The first party, an operator in a call center 10 and the second party, the recipient 20 hold a telephone conversation over a duplex channel belonging to a first data connection. The data carried over the duplex channel is either voice 1 or data over voice 1'. The first and second party device comprise a first and second ID validation module, whereby the first ID validation module is also referred to as "ID server interface of first party" 11, and the second ID validation module is not explicitly shown.

Firstly, the first party 10 calls the recipient 101. The second party answers the phone 201 and exchanges voice data 1 with the first party 10, deciding to proceed to identity validation. The first party starts the call center identity confirmation process 102, triggering a call handler request for line authentication 103. A request for a token, here a public key 111, is sent to the ID server 30 over a second data connection. The second data connection is a secure HTTPS connection 2. At the ID server 30, the call center identity is validated 302. If positive, the call center private key store 301 is accessed and/or extended to generate a public key 303 which is sent to the call center 10 over the secure HTTPS connection 2. At the first party, the public key is transformed to sound via a code library 112, and is subsequently sent over the line as audio 104, carried over the duplex channel as data over voice 1'. The phone application of the second party, i.e. the second party ID validation module, receives the sound 202, transforms it to the public key 303 and sends it to the ID server 30 over HTTPS 3. The ID server validates the public key 304 by comparing it to output obtainable from the relevant private key stored in the private key store 301. If the comparison is positive, the ID server generates a grant 305, notifying the grant over the HTTPS connection 3 to the second party. Upon receipt of the line confirmation by the second party 204, the voice call between both parties continues 105, 205.

### Example 3: Audio-sequence-based validation of first party in a video conversation

The present example concerns the same process as Example 2, the difference being that the first party 10 initiates a video call with video instead of voice 1. The process can be reproduced entirely, the difference being that apart from voice, also visual footage is present in the communication.

### Example 4: Text-based validation of first party in a chat conversation

In this example, the first and second party are involved in a chat conversation and decide to validate the identity of the first party. The process is similar to that of Example 2, with two differences. The first difference is that the exchanged data concerns chat data instead of voice data 1. The second difference is that the token is received and transmitted as text, thereby making the actions 112 and 203 superfluous, while actions 104 and 202 are limited to simple handling of a token (public key) that is transmitted as text string.

### Example 5: Text-based validation of first party in a telephone conversation

In this fifth example, the first and second party are involved in a telephone conversation and decide to validate the identity of the first party. The process is again similar to that of Example 2, the difference being that the token is received and transmitted as text, thereby making the actions 112 and 203 superfluous, while actions 104 and 202 are limited to handling of a token (public key) that is transmitted as text string. Hereby, the token is transmitted over a token channel comprised in the same first data connection as the voice data, whereby the token channel however differs from the duplex channel carrying the voice data. In case of a VoIP connection, this may e.g. concern a simple text messaging functionality integrated within the VoIP application. In an alternative embodiment, this may relate to a messaging application different from the VoIP application yet active on the devices of both parties and using the same first data connection.

### Example 6: Text-based validation of first party in a video conversation

This example is equivalent to Example 5, the only difference being that visual footage is added to the communication.

### Example 7: Audio-sequence-based validation of both parties in a telephone conversation

This example is similar to the second example, whereby the second party also performs validation of its identity. This second party validation may take place concurrently with the first party identity validation but may also follow or precede it.

It is supposed that the present invention is not restricted to any form of realization described previously and that some modifications can be added to the presented example of fabrication without reappraisal of the appended claims. For example, the present invention has been described in Example 1-6 referring to chat, voice and video conversations, but it is clear that the invention can be applied to telephone conferences, video conferences or chat conferences as well. Also, while example 7 refers to validation for all parties in a telephone conversation, validation can also be done for all parties in a chat conversation, a video conversation, a chat conference, a telephone conference or a video conference.

## Claims

1. Method for validating the identity of a first party with respect to a conversational communication over a duplex channel between said first party and a second party; said method comprising the steps of
(a) connecting said first party and said second party via a first data connection, said first data connection comprising a duplex channel between said first party and said second party, said duplex channel suitable for said conversational communication between said first party and said second party;
(b) sending a request for a token to an ID server via a second data connection by said first party, said second data connection different from said first data connection;
(c) receiving said token from said ID server via said second data connection by said first party;
(d) in response to receiving said token, transmitting said token to said second party via a token channel by said first party, for allowing said second party to validate the identity of said first party with respect to said conversational communication over said duplex channel;
wherein said token comprises at least an identification of said first party, and wherein said token channel is comprised in said first data connection.

2. Method according to claim 1, wherein said token channel is equal to said duplex channel.

3. Method according to claims 1 or 2, preferably according to claim 2, wherein said conversational communication comprises voice communication; and wherein said token is transmitted in step (d) as an audio sequence representing said token, optionally said audio sequence being inaudible to a human ear.

4. Method according to claim 1-3, wherein said conversational communication comprises a telephone conversation and/or a video conversation and/or a chat conversation between said first party and said second party.

5. Method according to claims 1-4, wherein the first data connection connecting said first party and said second party in step (a) comprises a communication server different from said ID server; and preferably wherein said first data connection comprises a first connection segment connecting said first party and said communication server and a second connection segment connecting said second party to said communication server.

6. Method according to claims 1-5, wherein said conversational communication comprises a telephone conference and/or a video conference and/or a chat meeting between said first party, said second party and at least one further party.

7. Method according to claims 1-6, wherein said token is uniquely associated with a single instance of said conversational communication between said first party and said second party; said token comprising at least a communication date associated with said single instance and preferably an identification of each of the parties associated with said single instance.

8. Method according to claims 1-7, wherein said token relates to a secret stored at the ID server; wherein said secret is unknown to any party of the conversational communication; wherein said relating between said secret and said token is such that said secret cannot be obtained from said token and that said token cannot have originated from any other source than said secret; preferably wherein said token concerns a public key belonging to a key pair; wherein said key pair consists of said public key and its associated private key, said secret concerning said private key.

9. Method according to claims 1-8, wherein said method comprises the additional steps (e) and (f) following step (d):
(g) upon receipt by said second party of said token transmitted by said first party in step (d), transmitting said token to said ID server over a third data connection by said second party, said third data connection different from both said first data connection and said second data connection, whereby optionally prior to transmitting said token, the token is determined from an audio sequence representing said token;
(h) receiving an indication from said ID server by said second party, said indication indicating whether said received token received in step (d) validly identifies said first party.

10. System for validating the identity of a first party with respect to a conversational communication over a duplex channel between said first party and a second party, said system comprising an ID server, a first party device and a second party device;
wherein each of said first party device and said second party device is configured for establishing a connection to the other device via a first data connection; wherein said first data connection comprises a duplex channel to the other device, said duplex channel suitable for said conversational communication between said first party and said second party;
wherein said first party device is configured for establishing a connection to said ID server via a second data connection different from said first data connection;
wherein each of said first party device and said second device is configured for establishing a token channel comprised in said first data connection, said token channel connecting the first party device and the second party device, wherein optionally said token channel is equal to said duplex channel;
wherein said ID server is configured for establishing a connection to said first party device via said second data connection;
wherein said system is configured for executing a method according to claims 1-8 involving a token;
and wherein optionally said device associated with said first party is configured for generating an audio sequence representing said token.

11. System according to claim 10, wherein the second party device is configured for establishing a connection to said ID server via a third connection different from both said first data connection and said second data connection;
wherein said ID server is configured for establishing a connection to said second device via said third data connection;
wherein said system is configured for executing a method according to claim 9 involving a token;
and wherein optionally said second party device is configured for determining the token from the audio sequence representing said token.

12. A first party device for use in a system for validating the identity of said first party with respect to a conversational communication over a duplex channel between said first party and a second party according to claims 10-11;
wherein said first party device is configured for establishing a connection to the second party device via a first data connection; wherein said first data connection comprises a duplex channel to the second device, said duplex channel suitable for said conversational communication between said first party and said second party;
wherein said first party device is configured for establishing a connection to an ID server via a second data connection different from said first data connection;
wherein the first party device is configured for establishing a token channel comprised in said first data connection, said token channel connecting the first party device and the second party device, wherein optionally said token channel is equal to said duplex channel;
wherein optionally said first party device is configured for generating an audio sequence representing a token;
wherein said first party device is configured for executing a method comprising the steps of:
(i) connecting to said second party device via said first data connection;
(ii) sending a request for a token to said ID server via said second data connection;
(iii) receiving said token from said ID server via said second data connection;
(iv) in response to receiving said token, transmitting said token to said second party device over said token channel;
wherein said token comprises at least an identification of said first party.

13. A second party device for use in a system for validating the identity of said first party with respect to a conversational communication over a duplex channel between said first party and said second party according to claims 10-11;
wherein said second party device is configured for establishing a connection to said first party device via a first data connection; wherein said first data connection comprises a duplex channel to said first party device, said duplex channel suitable for said conversational communication between said first party and said second party;
wherein said second party device is configured for establishing a connection to an ID server with a third data connection different from said first data connection;
wherein said second party device is configured for establishing a token channel comprised in said first connection, said token channel connecting the first party device and the second party device, wherein optionally said token channel is equal to said duplex channel;
wherein optionally said second party device is configured for determining a token from an audio sequence representing said token;
wherein said device associated with said first party is configured for executing a method comprising the steps of:
(V) connecting to said first party device via said first data connection;
(VI) receiving a token from the first party device via said token channel;
(VII) transmitting said token received in step (II) to said ID server via said third data connection, whereby optionally prior to transmitting said token, the token is determined from the audio sequence representing said token;
(VIII) receiving an indication from said ID server, said indication indicating whether said received token received in step (II) validly identifies said first party;
wherein said token comprises at least an identification of said first party.

14. An ID server for use in a system for validating the identity of a first party with respect to a conversational communication over a duplex channel between said first party and a second party according to claims 10-11 ;
wherein said ID server is configured for establishing a connection to a first party device via a second data connection;
wherein said ID server is configured for establishing a connection to a second party device via a third data connection different from said second data connection;
wherein said ID server is configured for executing a method comprising the steps of:
(06) receiving a request for a token via said second data connection from said first party device;
(07) sending said token via said second data connection to said first party device;
(08) receiving a to-be-tested token via said third data connection from said second party device;
(09) comparing said to-be-tested token to said token;
(10) sending an indication via said third data connection to said second party device; said indication indicating whether said to-be-tested token validly identifies said first party;
wherein said token comprises at least an identification of said first party.

15. Use of a method for validating the identity with respect to a conversational communication over a duplex channel with a plurality of parties according to claims 1-9, whereby the identity of each of said plurality of parties is validated.
